# EUROPEAN PATENT SPECIFICATION

(11) **EP 3 248 817 B1**
(45) Date of publication and mention of the grant of the patent: **04.12.2019**
(21) Application number: 17171720.0
(22) Date of filing: 18.05.2017
(51) Int. Cl.: B60G 11/27, B60G 7/04, B60G 15/12, B60G 15/14

(54) **JOUNCE BUMPERS AND SPRING ASSEMBLIES INCLUDING SAME**
ANSCHLAGPUFFER UND FEDERANORDNUNGEN DAMIT
BUTÉE ET ENSEMBLES À RESSORT LES COMPRENANT

(30) Priority: 27.05.2016 US 201615167894
(43) Date of publication of application: 29.11.2017
(73) Proprietor: Firestone Industrial Products Company, LLC, Nashville, TN 37201 (US)
(72) Inventor: DeBruler, Brian S., Noblesville, IN 46062 (US); Chapman, Todd A., Saratoga, CA 95070 (US)
(74) Representative: Banzer, Hans-Jörg

(56) References cited:
- EP-A2- 1 308 750
- US-A1- 2014 061 987
- WILKENS M: "FEDERELEMENTE AUS MIKROZELLIGEN, DYNAMISCH HOCHBELASTBAREN POLYURETHAN-ELASTOMEREN", ATZ - AUTOMOBILTECHNISCHE ZEITSCHRIFT, SPRINGER, vol. 97, no. 3, 1 January 1995 (1995-01-01), pages 170-174, 181, XP000494820, ISSN: 0001-2785

## Description

### BACKGROUND

The subject matter of the present disclosure broadly relates to the art of spring devices and, more particularly, to jounce bumpers configured for cooperative use with associated sensors as well as gas spring assemblies, non-gas (e.g., coil) spring assemblies and/or spring and damper assemblies including such a jounce bumper and one or more sensors. Suspension systems including one or more of such gas spring assemblies, non-gas spring assemblies and/or spring and damper assemblies are also included.

The subject matter of the present disclosure may find particular application and use in conjunction with components for wheeled vehicles, and will be shown and described herein with reference thereto. However, it is to be appreciated that the subject matter of the present disclosure is also amenable to use in other applications and environments, and that the specific uses shown and described herein are merely exemplary. For example, the subject matter of the present disclosure could be used in connection with gas spring assemblies, non-gas (e.g., coil) spring assemblies and/or spring and damper assemblies of non-wheeled vehicles, support structures, height adjusting systems and actuators associated with industrial machinery, components thereof and/or other such equipment. Accordingly, the subject matter of the present disclosure is not intended to be limited to use associated with gas spring suspension systems of wheeled vehicles.

Wheeled motor vehicles of most types and kinds include a sprung mass, such as a body or chassis, for example, and an unsprung mass, such as two or more axles or other wheel-engaging members, for example, with a suspension system disposed therebetween. Typically, a suspension system will include a plurality of spring devices as well as a plurality of damping devices that together permit the sprung and unsprung masses of the vehicle to move in a somewhat controlled manner relative to one another. Movement of the sprung and unsprung masses toward one another is normally referred to in the art as jounce motion while movement of the sprung and unsprung masses away from one another is commonly referred to in the art as rebound motion.

Generally, the range of motion of a suspension system extends between a first or fully compressed condition and a second or fully extended condition. To eliminate contact between opposing portions of the sprung and unsprung masses, contact between opposing portions of components of the suspension system and/or contact between any combination thereof, jounce bumpers are commonly installed on one or more portions of the vehicle to prevent such opposing portions from directly impacting one another. Thus, during jounce motion of the suspension system, an opposing component will contact the jounce bumper rather than impacting the component on or near which the jounce bumper is mounted.

Additionally, a variety of devices and/or arrangements have been and are currently used to affect control of the relative position of one structural component of the vehicle to another structural component. As one example, a mechanical linkage valve that is in fluid communication between a pressurized gas source and a gas spring assembly can be interconnected between the opposing structural components. As the structural components move toward and away from one another, the valve opens and closes to permit pressurized gas to be transferred into and out of the gas spring assembly. In this manner, such mechanical linkage valves can permit control of the height of the gas spring assembly.

US 2014/061987 A1 discloses an assembly comprising a spring element having a longitudinal axis and extending longitudinally between opposing first and second ends, a first end member disposed in operative engagement with the spring element along the first end, a second end member disposed in operative engagement with the spring element along the second end, and a sensing device including an outer surface with a cross-sectional dimension and being secured in a predetermined position along one of the first and second end members, the sensing device operative to transmit at least one of sound, pressure, light and electromagnetic waves toward a distal surface and receive the at least one of the sound, pressure, light and electromagnetic waves reflected off of the distal surface to at least partially sense at least one of acceleration, pressure, temperature and height conditions of the assembly. In addition, the assembly comprises a jounce bumper supported along the one of the first and second end members in spaced relation to the distal surface and at least partially covering the sensing device, the jounce bumper including a bumper body including a mounting end, a distal end and an outer surface extending peripherally about the bumper body between the mounting and distal ends, and the bumper body including a sensing passage surface that at least partially defines a sensing passage extending through the bumper body between the mounting and distal ends such that the sensing device transmits the at least one of the sound, pressure, light and electromagnetic waves and receives the reflection of the at least one of the sound, pressure, light and electromagnetic waves through the sensing passage. An indexing recess and a tab received within the indexing recess are provided to inhibit rotation of the jounce bumper relative to the sensing device.

Unfortunately, such arrangements have a number of problems and/or disadvantages that are commonly associated with the continued use of the same. One problem with the use of mechanical linkage valves, particularly those used in association with the suspension system of a vehicle, is that the linkages are frequently subjected to physical impacts, such as may be caused by debris from a roadway, for example. This can result in the linkage being significantly damaged or broken, such that the valve no longer operates properly, if the valve operates at all.

As an alternative to mechanical linkage sensors, non-contact sensors that utilize sound, pressure and/or electromagnetic waves traveling through a gas medium have been used in determining the relative position of one component to another. One advantage of such arrangements over mechanical linkages is that the non-contact sensors are often at least partially housed within the gas spring assembly, which can at least partially shelter the non-contact sensor from impacts and exposure. However, such non-contact sensors are typically directed toward a distal component that has a target that is suitable to reflect the sound, pressure and/or electromagnetic waves back to the sensor for determining the distance therebetween. In some cases, an unobstructed path between the non-contact sensors and the target of the distal component may be desired. However, gas spring assemblies often include one or more components, such as conventional jounce bumpers, for example, that are disposed therein and which may, in some cases, inhibit, at least partially shield or otherwise obstruct the non-contact sensor when located in a desired position.

As such, it is believed desirable to develop jounce bumper and gas spring assembly constructions that overcome the foregoing and/or other disadvantages of known designs, and/or otherwise advance the art of gas spring devices, such as, for example, by providing for improved performance and/or reduced cost of manufacture.

### BRIEF SUMMARY

According to the invention, an assembly as defined in claim 1, a gas spring assembly as defined in claim 7, a gas spring and gas damper assembly as defined in claim 12, and a method of assembling a gas spring assembly as defined in claim 14 are provided. The dependent claims define preferred and/or advantageous embodiments of the invention.

### BRIEF DESCRIPTION OF THE DRAWINGS

FIG. 1 is a schematic representation of one example of a suspension system of an associated vehicle including a gas spring assembly in accordance with the subject matter of the present disclosure.
FIG. 2 is a side view, in partial cross section, of one example of a gas spring and damper assembly that includes a sensing device and one example of a jounce bumper in accordance with the subject matter of the present disclosure.
FIG. 3 is an enlarged view of the portion of the assembly, sensing device and jounce bumper identified as Detail 3 in FIG. 2.
FIG. 4 is an enlarged view of the portion of the assembly and jounce bumper identified as Detail 4 in FIG. 2.
FIG. 5 is a cross-sectional plan view of the assembly, sensing device and jounce bumper in FIGS. 2-4 taken from along line 5-5 in FIG. 3.
FIG. 6 is a cross-sectional plan view of the jounce bumper in FIGS. 2-5 taken from along line 6-6 in FIG. 3.
FIG. 7 is a cross-sectional plan view of an alternate configuration of the jounce bumper in FIGS. 2-6.
FIG. 8 is a cross-sectional plan view of another alternate configuration of the jounce bumper in FIGS. 2-6.
FIG. 9 is a cross-sectional plan view of a further alternate configuration of the jounce bumper in FIGS. 2-6.
FIG. 10 is an enlarged view, similar to FIG. 3, illustrating a portion of another example of an assembly, sensing device and jounce bumper in accordance with the subject matter of the present disclosure.
FIG. 11 is a cross-sectional plan view of the assembly, sensing device and jounce bumper in FIG. 10 taken from along line 11-11 thereof.

### DETAILED DESCRIPTION

Turning now to the drawings, it is to be understood that the showings are for purposes of illustrating examples of the subject matter of the present disclosure and are not intended to be limiting. Additionally, it will be appreciated that the drawings are not to scale and that portions of certain features and/or elements may be exaggerated for purposes of clarity and/or ease of understanding.

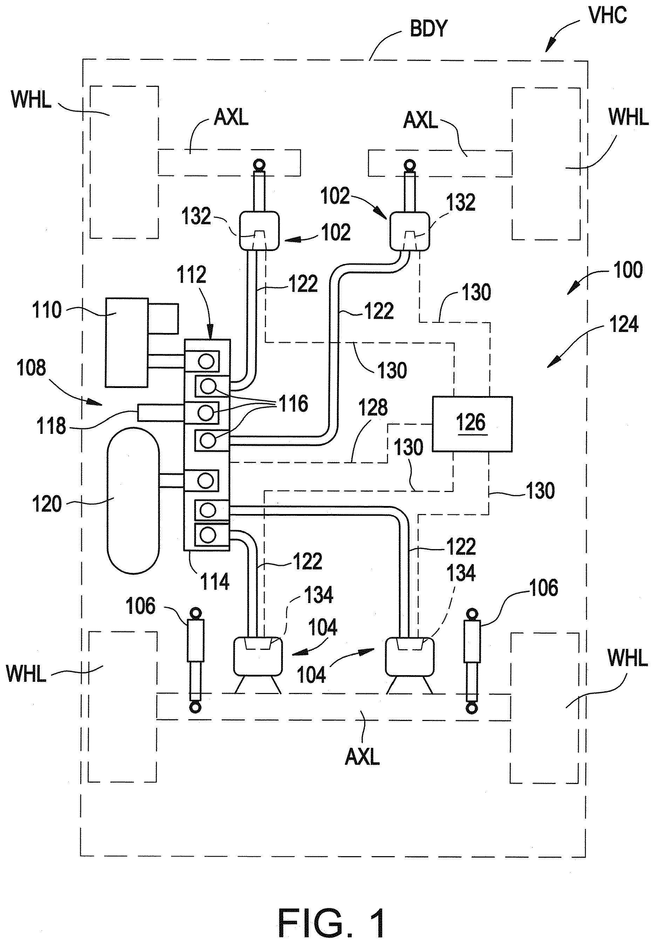

FIG. 1 illustrates one example of a suspension system **100** disposed between a sprung mass, such as an associated vehicle body **BDY**, for example, and an unsprung mass, such as an associated wheel **WHL** or an associated axle **AXL**, for example, of an associated vehicle **VHC.** It will be appreciated that any one or more of the components of the suspension system can be operatively connected between the sprung and unsprung masses of the associated vehicle in any suitable manner.

The suspension system can include a plurality of spring assemblies supported between the sprung and unsprung masses of the associated vehicle. Additionally, the suspension system of the vehicle can include a plurality of damping members that are operatively connected between the sprung and unsprung masses of the vehicle. In some cases, the spring assemblies (e.g., gas spring assemblies and/or coil spring assemblies) and damping members (e.g., shock absorbers and/or struts) may be provided as separate components. In other cases, however, the spring assemblies and damping members may be provided as spring and damper assemblies (e.g., gas spring over damper assemblies and/or coil spring over damper assemblies). In the arrangement shown in FIG. 1, for example, suspension system **100** includes two gas spring and damper assemblies **102** that are disposed toward opposing corners along one end of associated vehicle **VHC** adjacent a corresponding wheel **WHL.** Additionally, suspension system **100** includes two gas spring assemblies **104** and two dampers **106** that are provided separately from the gas spring assemblies. In the arrangement shown in FIG. 1, one gas spring assembly and one damper is operatively connected toward opposing corners along the opposing end of associated vehicle **VHC** adjacent a corresponding wheel.

It will be appreciated that any other suitable number of damping members, gas spring assemblies and/or gas spring and damper assemblies could alternately be used in any other configuration or arrangement. As shown in FIG. 1, gas spring and damper assemblies **102,** gas spring assemblies **104** and dampers **106** are supported between axles **AXL** and body **BDY** of associated vehicle **VHC.** Additionally, it will be recognized that the gas spring assemblies shown and described in FIG. 1 (e.g., the gas springs of assemblies **102** and gas spring assemblies **104**) are illustrated as being of a rolling lobe-type construction. It is to be understood, however, that gas spring assemblies of other types, kinds and/or constructions (e.g., convoluted bellows-type constructions) could alternately be used.

Suspension system **100** also includes a pressurized gas system **108** operatively associated with the gas spring assemblies for selectively supplying pressurized gas (e.g., air) thereto and selectively transferring pressurized gas therefrom. In the exemplary embodiment shown in FIG. 1, pressurized gas system **108** includes a pressurized gas source, such as a compressor **110**, for example, for generating pressurized air or other gases. A control device, such as a valve assembly **112**, for example, is shown as being in communication with compressor **110** and can be of any suitable configuration or arrangement. In the exemplary embodiment shown, valve assembly **112** includes a valve block **114** with a plurality of valves **116** supported thereon. Valve assembly **112** can also optionally include a suitable exhaust, such as a muffler **118**, for example, for venting pressurized gas from the system. Optionally, pressurized gas system **108** can also include a reservoir **120** in fluid communication with the compressor and/or valve assembly **112** and suitable for storing pressurized gas.

Valve assembly **112** is in communication with gas spring and damper assemblies **102** and with gas spring assemblies **104** through suitable gas transfer lines **122.** As such, pressurized gas can be selectively transferred into and/or out of the gas spring and damper assemblies and/or the gas spring assemblies through valve assembly **112** by selectively operating valves **116**, such as to alter or maintain vehicle height at one or more corners of the vehicle, for example.

Suspension system **100** can also include a control system **124** that is capable of communication with any one or more systems and/or components (not shown) of vehicle **VHC** and/or suspension system **100**, such as for selective operation and/or control thereof. Control system **124** can include a controller or electronic control unit (ECU) **126** communicatively coupled with compressor **110** and/or valve assembly **112**, such as through a conductor or lead **128**, for example, for selective operation and control thereof, which can include supplying and exhausting pressurized gas to and/or from gas spring and damper assemblies **102** and/or gas spring assemblies **104.** Controller **126** can be of any suitable type, kind and/or configuration.

Control system **124** can also, optionally, include one or more sensing devices (not shown in FIG. 1), such as one or more acceleration sensors, one or more pressure sensors, one or more temperature sensors, one or more height or distance sensors or any combination of any one or more thereof, for example. As non-limiting examples, such sensing devices can include one or more non-contact sensing devices that can be operatively associated with the gas spring assemblies and/or gas spring and damper assemblies, and capable of outputting or otherwise generating data, signals and/or other communications having a relation to acceleration, gas pressure, temperature and/or height of one or more of the assemblies or a distance between other components of the vehicle. Such sensing devices can be in communication with ECU **126**, which can receive the data, signals and/or other information (e.g., height or distance signals) therefrom. The one or more sensing devices can be in communication with ECU **126** in any suitable manner, such as through conductors or leads **130**, for example. Additionally, it will be appreciated that the sensing devices can be of any suitable type, kind and/or construction, such as may operate using sound, pressure, light and/or electromagnetic waves, for example.

One or more of the gas spring and gas damper assemblies and/or the gas spring assemblies of suspension system **100** also includes a jounce bumper in accordance with the subject matter of the present disclosure used in operative association with a corresponding one or more of the non-contact sensing devices. For example, gas spring and gas damper assemblies **102** are shown in FIG. 1 as including jounce bumpers **132**, which can be disposed in operative associate with one of more sensing devices (not shown in FIG. 1) and constructed in accordance with the subject matter of the present disclosure. As another example, gas spring assemblies **104** are shown in FIG. 1 as including jounce bumpers **134**, which can be disposed in operative associate with one of more sensing devices (not shown in FIG. 1) and constructed in accordance with the subject matter of the present disclosure.

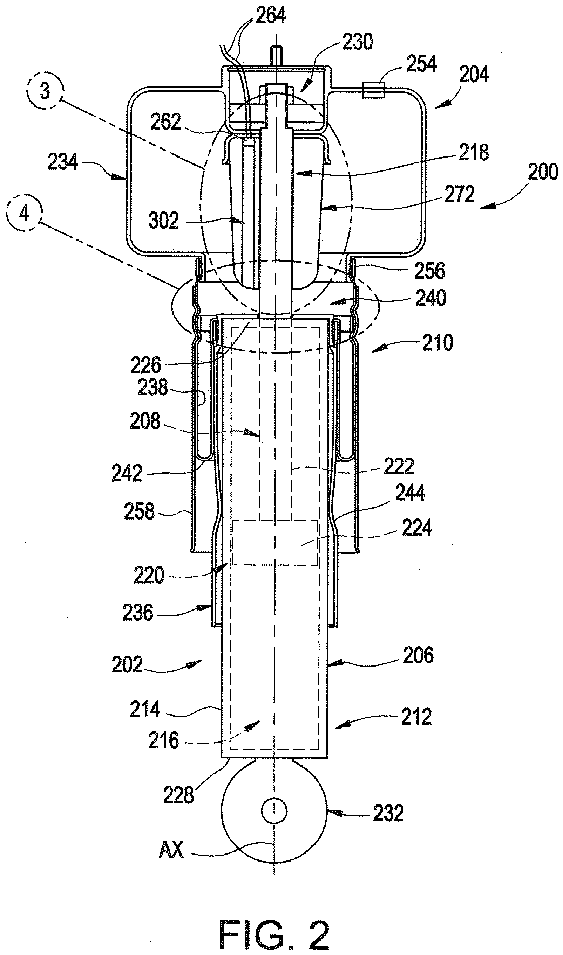

Having described an example of a suspension system (e.g., suspension system **100**) that can include a gas spring and damper assembly and/or a gas spring assembly in accordance with the subject matter of the present disclosure, one example of such a gas spring and damper assembly will now be described in connection with FIGS. 2-5. It will be recognized and understood, however, that the following description of the subject matter of the present disclosure is equally applicable to other types and kinds of gas spring constructions, such as gas spring assemblies **104**, for example.

One example of a gas spring and damper assembly **200**, such as may be suitable for use as a gas spring and damper assembly **102** in FIG. 1, for example, is shown in FIGS. 2-5 and can include a damper assembly **202** and a gas spring assembly **204** that is operatively connected with the damper assembly. It will be appreciated that, in use, gas spring and damper assembly **200** can undergo changes in length (i.e., can be displaced between extended and collapsed conditions) as a suspension system within which one or more assemblies are installed dynamically moves to accommodate forces and/or inputs, such as forces and/or inputs acting on a vehicle, for example.

Damper assembly **202** is shown in FIGS. 2-5 as having an axis **AX** and including a damper housing **206** and a damper rod assembly **208** that is at least partially received in the damper housing. Damper housing **206** extends axially between opposing housing ends **210** and **212**, and includes a housing wall **214** that at least partially defines a damping chamber **216** (FIG. 2). Damper rod assembly **208** extends lengthwise between opposing ends **218** and **220** and includes an elongated rod **222** and a damper piston **224** disposed along end **220** of damper rod assembly **208.** Damper piston **224** is received within damping chamber **216** of damper housing **206** for reciprocal movement along the housing wall in a conventional manner. A quantity of damping fluid (not shown) can be disposed within damping chamber **216** and damper piston **224** can be displaced through the damping fluid to dissipate kinetic energy acting on gas spring and damper assembly **200.**

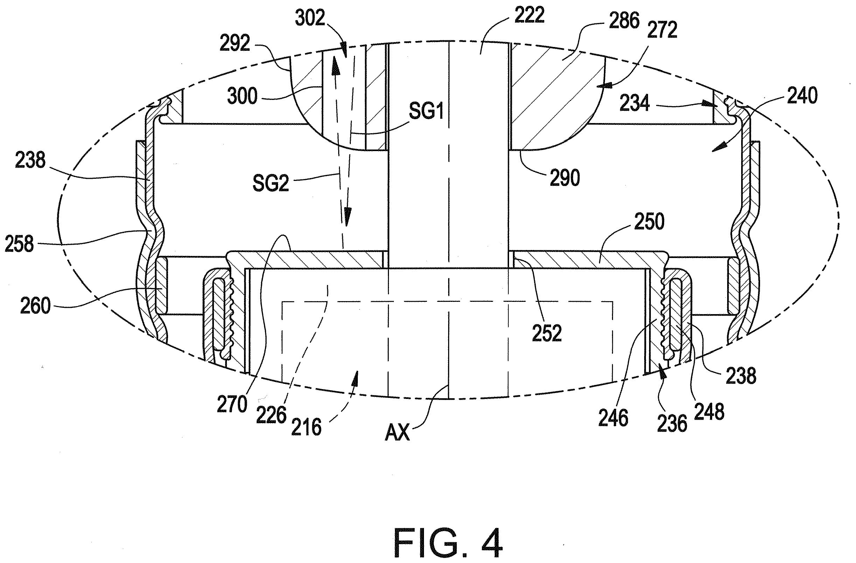

Housing wall **214** can form an opening (not shown) along housing end **210.** A damper end wall **226** (FIG. 4) can extend across the opening and can be secured on or along housing wall **214** such that a substantially fluid-tight connection is formed therebetween. Damper end wall **226** can include an opening (not shown) and elongated rod **222** can extend axially-outward from damping chamber **216** through the opening in a direction opposite housing end **212.** Additionally, a damper end wall **228** can be connected across end **212** of damper housing **206** such that a substantially fluid-tight connection is formed therebetween.

Elongated rod **222** projects outwardly from damper end wall **226** such that end **218** of the elongated rod is outwardly exposed from the damper housing and is accessible for securement of one or more associated components and/or devices. A connection feature **230**, such as a plurality of threads, for example, can be provided on or along the elongated rod for use in operatively connecting gas spring and damper assembly **200** to an associated vehicle structure or to a component of gas spring assembly **204**, such as is shown in FIG. 2, for example. Damper assembly **202** also includes a connection feature **232**, such as a pivot or bearing mount, for example, that is operatively disposed along damper housing **206** and is adapted to operatively connect damper housing **206** to an associated vehicle structure.

Gas spring assembly **204** includes an end member **234**, such as a top cap, bead plate or reservoir enclosure, for example. Gas spring assembly **204** also includes an end member **236**, such as a roll-off piston, for example, that is disposed in axially-spaced relation to end member **234.** A flexible wall, such as an elongated flexible sleeve **238**, for example, can be operatively connected between end members **234** and **236** in a substantially fluid-tight manner such that a spring chamber **240** is at least partially defined therebetween. In some cases, flexible sleeve **238** can form a rolling lobe **242** that is displaced along an outer surface **244** of end member **236** as gas spring and damper assembly **200** moves between extended and compressed conditions.

As identified in FIG. 4, end member **236** can include a wall portion **246** along which one end of flexible sleeve **238** is operatively connected, such as, for example, through the use of a retaining ring **248** that can be crimped radially-inward or otherwise deformed to form a substantially fluid-tight connection therebetween. End member **236** can also include a wall portion **250** that projects radially-inward from wall portion **246.** In some cases, end member **236** can be fit over or otherwise receive at least a portion of damper housing **206** such that wall portion **250** engages end wall **226** of the damper housing, such as to support the end member on the damper housing. A passage wall **252** at least partially defines a passage (not numbered) that extends through end member **236** and is dimensioned to permit elongated rod **222** to pass therethrough. In such case, elongated rod **222** can slidably translate into and out of the gas spring assembly through end member **236.** Additionally, a gas transfer passage or port **254** can extend through end member **234** such that fluid communication into and out of spring chamber **240** can be achieved. Port **254** can be adapted to receive a suitable connector fitting (not shown), such as may be suitable for operatively connecting gas transfer lines **122** (FIG. 1) to the gas spring and damper assembly.

The opposing end of flexible sleeve **238** can be secured on or along end member **234** in any suitable manner. As one example, a portion of the flexible sleeve can be secured in abutting engagement along a wall portion of end member **234**, such as by way of a retaining ring **256** that can be crimped radially inward or otherwise deformed to form a substantially fluid-tight connection therebetween. Additionally, gas spring and damper assembly **200** can, optionally, include an external sleeve or support, such as a restraining cylinder **258**, for example, that can be secured on or along the flexible sleeve in any suitable manner. As one example, a portion of the flexible sleeve can be secured in abutting engagement along a wall portion of restraining cylinder **258** by way of a retaining ring **260** that can be crimped radially outward or otherwise deformed to form an engagement between the restraining cylinder and the flexible sleeve. It will be appreciated, however, that other arrangements could alternately be used.

Gas spring and damper assembly **200** also includes a non-contact sensing device **262** that is disposed within spring chamber **208** and operative to output or otherwise generate signals, data and/or other information having a relation to one or more properties and/or characteristics associated with the assembly and/or one or more components thereof. As non-limiting examples, such one or more properties and/or characteristics can include acceleration, gas pressure, temperature and/or a relative distance or height of the gas spring and damper assembly. It will be appreciated that sensing device **260** can be of any suitable type, kind, configuration and/or construction, and that the sensing device can be supported on or along the gas spring and damper assembly in any suitable manner. In some cases, sensing device **262** can be communicatively coupled with a control system or a component thereof, such as ECU **126** of control system **124**, for example, in any suitable manner. As one example, sensing device **262** can include one or more electrical conductors or leads **264**, such as may operate as leads **130** in FIG. 1, for example. Also, it will be appreciated that sensing device **262** function in any suitable manner and according to any suitable principles of operation. As one example, the sensing device could transmit and receive ultrasonic waves. As another example, the sensing device could include one or more components that communicate using electromagnetic waves, such as radio-frequency identification communications or infrared waves, for example.

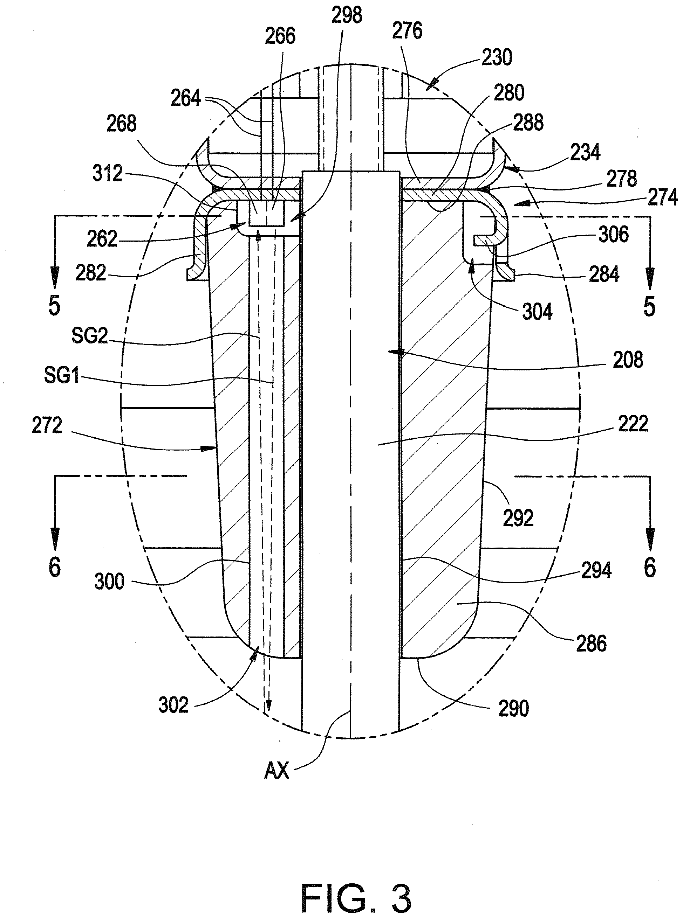

In the arrangement shown in FIGS. 2 and 3, sensing device **262** includes a transmitting portion **266** and a receiving portion **268.** Transmitting portion **266** can include a transmitter or other wave generator operative to broadcast electromagnetic waves, such as waves having a frequency within a range of approximately 30 kHz to approximately 790 THz, for example. Receiving portion **268** can include a receiver or other wave receptor operative to receive electromagnetic waves within such a range of frequencies. In the arrangement shown in FIGS. 2-5, for example, transmitting portion **266** is shown broadcasting signals, which are represented by arrow **SG1**, that are directed toward an outer surface **270** of wall portion **250** and reflected back to receiving portion **268**, such as is represented by arrow **SG2.**

As indicated above, it will be appreciated that a jounce bumper in accordance with the subject matter of the present disclosure can be configured for cooperative use in operative association with one or more sensing devices (e.g., sensing device **262**) in connection with spring assemblies and/or spring and damper assemblies of any suitable type, kind and/or configuration. For example, a jounce bumper in accordance with the subject matter of the present disclosure could be used in operative association with a spring and damper assembly that includes a coil spring disposed between opposing end members and connected to an otherwise conventional hydraulic damper. Such constructions are commonly referred to in the art as coil over damper assemblies or over damper coil springs.

As another example, gas spring and damper assembly **200** can include a jounce bumper in accordance with the subject matter of the present disclosure that is configured for cooperative use in operative association with one or more sensing devices (e.g., sensing device **262**)**.** One example of such a jounce bumper is shown in FIGS. 2-5 as a jounce bumper **272** that is disposed within spring chamber **208.** It will be appreciated that the jounce bumper can be supported on or along any one or more components of damper assembly **202** and/or gas spring assembly **204**, in any suitable manner. For example, in the arrangement shown in FIGS. 2-5, assembly **200** includes a jounce bumper mount **274** that is secured along a wall portion **276** of end member **234**, such as by way of a flowed-material joint **278**, for example. Jounce bumper mount **274** includes a base wall **280** and a side wall **282** that extends from along the base wall to an outer peripheral edge **284.** In some cases, jounce bumper mount **274** can have a somewhat cup-shaped configuration that includes a cavity (not numbered) that is at least partially defined by base wall **280** and side wall **282** and is dimensioned to receive at least a portion of jounce bumper **272**.

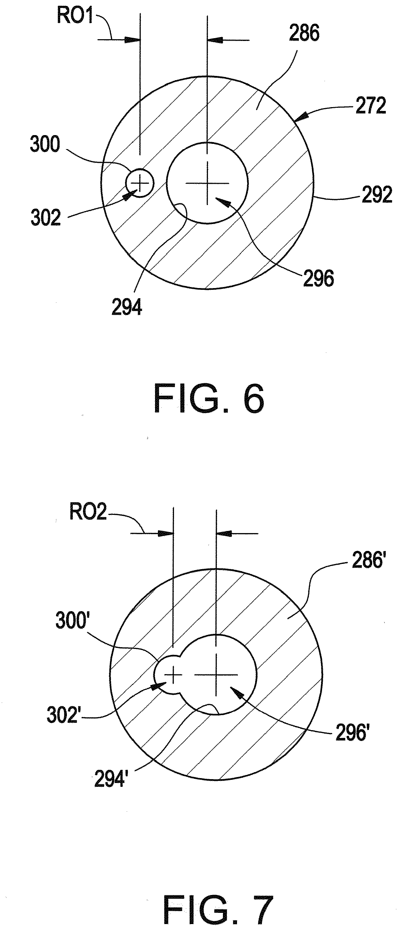

Jounce bumper **272** includes a bumper body **286** that extends between a first or mounting surface **288** and a second or distal surface **290** with an outer side surface **292** extending longitudinally therebetween. In some cases, a rod passage surface **294** can extend longitudinally through jounce bumper **272** to at least partially define a rod passage **296** (FIG. 6) through which damper rod **222** can extend. In some cases, a sensor recess **298** can be formed into bumper body **286**, such as along mounting surface **288**, for example. If provided, sensor recess **298** is preferably dimensioned to permit at least sensing device **262** to be at least partially receive within the bumper body.

Jounce bumper **272** also includes a sensing passage surface **300** that at least partially defines a sensing passage **302** that extends through at least a portion of bumper body **286.** In some cases, sensing passage surface **300** can be dimensioned to directly receive at least a portion of sensing device **262**, such as is shown in FIG. 2, for example. In other cases, a sensor recess, such as sensor recess **298**, for example, can be included. It will be appreciated that sensing passage surface **300** can at least partially form a sensing passage that includes a sensor recess portion (e.g., sensor recess **298**) and an elongated passage portion (e.g., sensing passage **302**)**.** In either case, in a preferred arrangement, sensing passage **302** is disposed in communication with sensing device **262** such that the sensing device can be exposed to properties and/or characteristics being sensed and/or such that signals or waves broadcast or otherwise transmitted from and/or received by the sensing device can be communicated through the sensing passage toward or from a distal feature or component (e.g., outer surface **270** of wall portion **250)** that would otherwise be obscured by the jounce bumper.

It will be appreciated that sensing passage **302** can be of any suitable size, shape, configuration and/or orientation. In the arrangement shown in FIGS. 2-6, for example, sensing passage surface **300** has a generally cylindrical shape. Additionally, sensing passage **302** is disposed in radially-offset relation to the rod passage, such as is represented in FIG. 6 by reference dimension **RO1**, for example, with the sensing passage being fully defined within bumper body **286.** One example of an alternate arrangement is shown in FIG. 7 in which bumper body **286'** includes a sensing passage surface **300'** that at least partially defines a sensing passage **302'** in communication with rod passage **296'** that is defined by rod passage surface **294'.** In such an alternate arrangement, passage **302'** is radially-offset from passage **296',** as is represented in FIG. 7 by reference dimension **RO2**, by a lesser distance than radial-offset dimension **RO1** of passages **296** and **302** in FIGS. 2-6. In this manner, passages **296'** and **302'** together define a non-circular passage through bumper body **286'.**

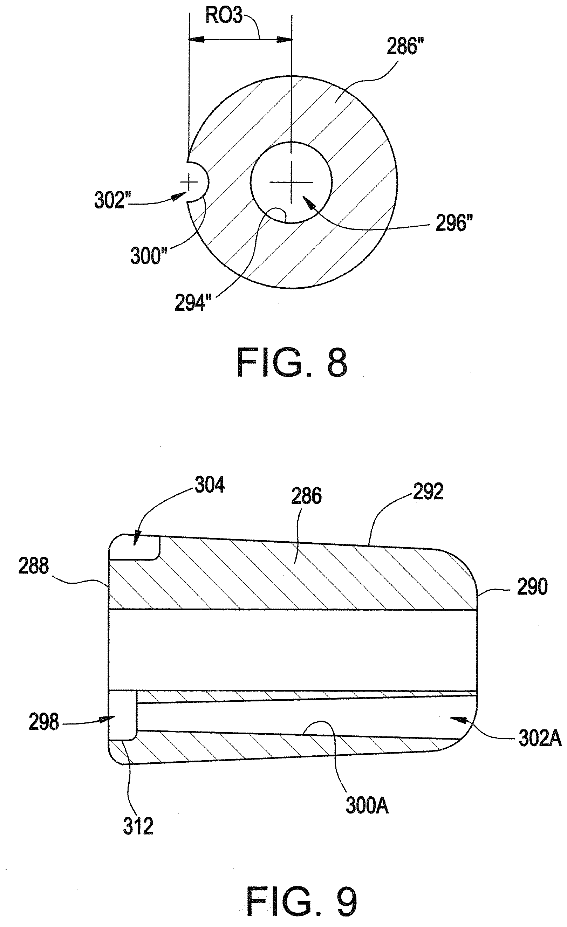

Another example of an alternate arrangement of a jounce bumper in accordance with the subject matter of the present disclosure is shown in FIG. 8 in which bumper body **286**" includes a sensing passage surface **300**" that at least partially defines a sensing passage **302**"**.** In such an alternate arrangement, passage **302**" is radially-offset from passage **296**"**,** as is represented in FIG. 8 by reference dimension **RO3**, by a distance greater than radial-offset dimension **R01** of passages **296** and **302** in FIGS. 2-6. In this manner, passage **302**" can form an elongated slot or groove extending in a longitudinal direction along outer side surface **292**" of bumper body **286**"**.** A further example of an alternate arrangement of a jounce bumper in accordance with the subject matter of the present disclosure is shown in is shown in FIG. 9 in which bumper body **286** includes a sensing passage surface **300A** that at least partially defines a sensing passage **302A** that has a tapered or frustoconical cross-sectional shape. It will be appreciated, however, that passages of other sizes, shapes, configurations and/or arrangements could alternately be used.

It will be appreciated that jounce bumper **272** is oriented within spring chamber **240** such that the sensing passage thereof (e.g., sensing passage **302**, **302'**, **302"** and/or **302A)** is disposed in approximate alignment with sensing device **262.** In such an arrangement, properties and/or characteristics being sensed and/or signals broadcast from and/or received by sensing device **262** can be communicated or otherwise transmitted through the sensing passage, such as has been described above. As such, it may, in some cases, be beneficial to provide one or more features and/or combination of features operative to index or otherwise orient and maintain sensing passage **302** in approximate alignment with the sensing device.

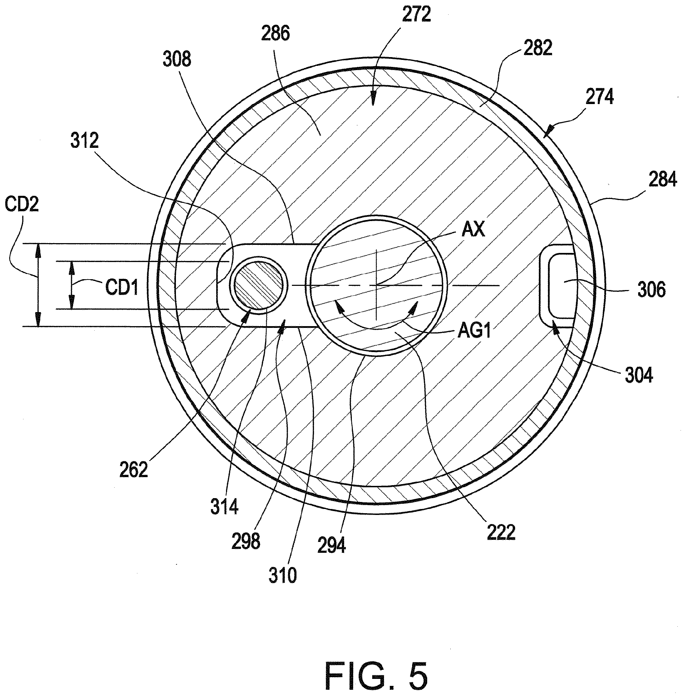

It will be appreciated that any suitable combination of components and/or features can be used to index or otherwise orient and maintain the sensing device in communication with at least a portion of the sensing passage of the jounce bumper., In some cases, one or more components and/or features of the gas spring, the gas damper or the overall assembly that are provided primarily for other purposes, can be used to locate, index and/or otherwise maintain the jounce bumper in a predetermined axial and/or rotational orientation relative to the sensing device. In other cases, one or more indexing features can be included on or along the jounce bumper and used in combination with a corresponding number of one or more indexing features on another component of the gas spring and damper assembly (e.g., gas spring and damper assembly **200**)**.** For example, one or more of the indexing features can be disposed in a predetermined axial and/or rotational orientation relative to the sensing device and/or a sensor recess (e.g., sensor recess **298**), such as is represented in FIG. 5 by angular dimension **AG1.** It will be appreciated that such a predetermined orientation can have a distance and/or angle within any suitable range of distance and/or angles.

As one example of such an arrangement, jounce bumper **272** is shown as including an indexing recess **304** that extends into bumper body **286** from along mounting surface **288** and/or outer side surface **292.** Additionally, jounce bumper mount **274** is shown as including a tab **306** that extends radially inward from along side wall **282**, and is received within indexing recess **304**, such as to inhibit or at least minimize rotation of the jounce bumper relative to sensing device **262**, for example. It will be appreciated, however, that other configurations and/or arrangements could alternately be used.

Another example of a suitable construction in accordance with the subject matter of the present disclosure is shown in FIGS. 3, 5 and 9 in which sensor recess **298** is at least partially defined by one or more surfaces and/or surface portions. It will be appreciated that surfaces and/or surface portions of any suitable size, shape and/or quantity can be used. As identified in FIGS. 3, 5 and 9, sensor recess **298** can be at least partially formed by opposing side surface portions **308** and **310** with a side surface portion **312** extending therebetween. It will be appreciated that side surface portions **308** and **310** are spaced apart from one another such that sensor recess **298** has a cross-sectional dimension, such as is represented in FIG. 5 by reference dimension **CD1.** Sensing device **262** can include an outer side surface (or surface portion) **314** that at least partially defines a cross-sectional dimension of sensing device **262,** such as is represented in FIG. 5 by reference dimension **CD2.** In a preferred arrangement, cross-sectional dimension **CD2** of sensing device **262** is less than cross-sectional dimension **CD1** of sensor recess **298** such that a space or gap **316** is formed between outer side surface **314** and at least one of side surface portions **308** and **310.** In a preferred arrangement, gap **316** is dimensioned such that rotation of jounce bumper **272** about longitudinal axis **AX** is limited by outer side surface **314** contacting one of side surface portions **308** and/or **310.** In this way, the combination of sensing device **262** and jounce bumper **272** can be self-indexing in a manner suitable for maintaining sensing device **262** in communication with the associated sensing passage (e.g., one of sensing passages **302, 302', 302"** and/or **302A**)**.**

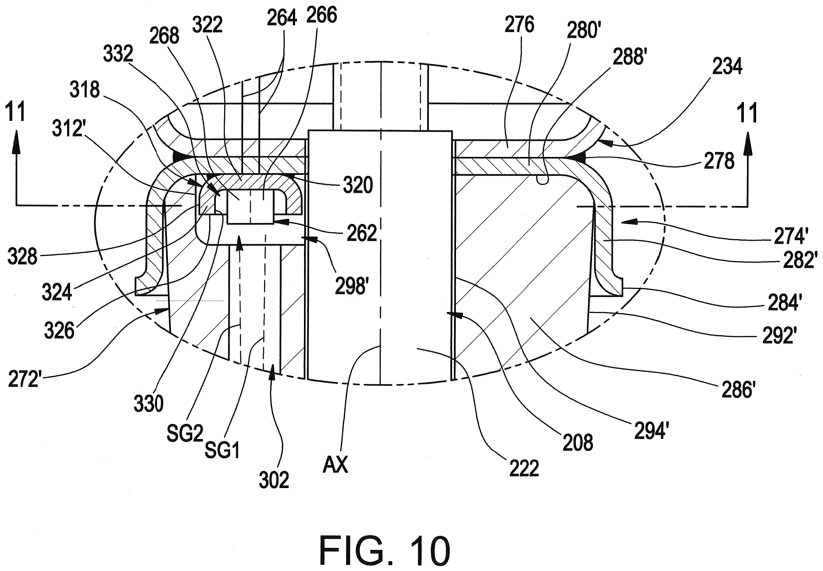

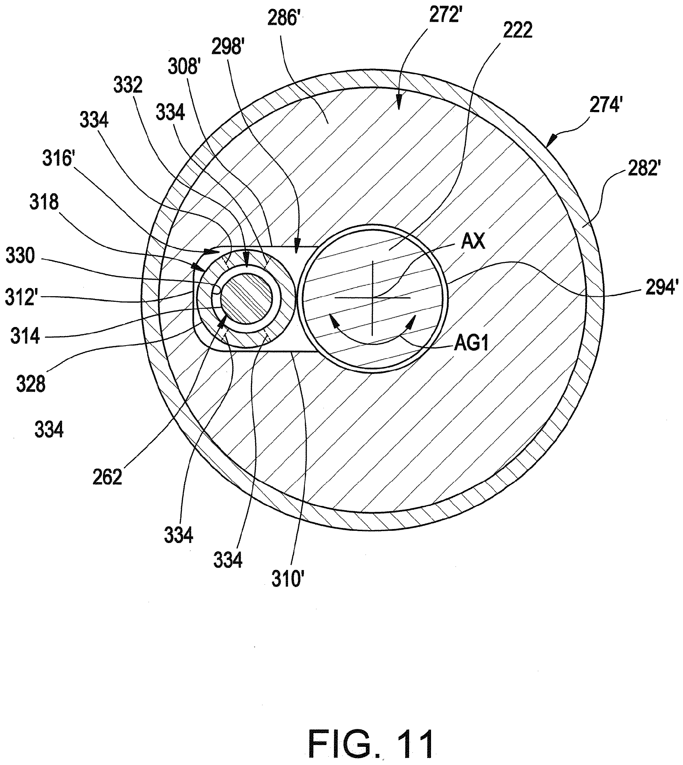

In some cases, it may be deemed to be undesirable to permit abutting engagement between the sensing device and a surface of the jounce bumper. In such cases, a further example of a suitable construction in accordance with the subject matter of the present disclosure is shown in FIGS. 10 and 11 in which sensing device **262** is supported within a sensor shield **318.** In such an arrangement, the combination of the sensor shield and jounce bumper **272'** can be operative to index or otherwise orient and retain the jounce bumper in a desired position relative to the sensing device while isolating forces and/or loads associated with such indexing functionality.

With further reference to FIGS. 10 and 11, jounce bumper **272'** is shown as being disposed within spring chamber **208** and substantially similar to jounce bumper **272** discussed above. Jounce bumper **272'** differs from jounce bumper **272** at least in that the inclusion and use of indexing recess **304** of jounce bumper **272** can be and is omitted from jounce bumper **272'.** Jounce bumper **272'** can be supported on a jounce bumper mount **274'** that is secured along a wall portion **276** of end member **234**, such as by way of a flowed-material joint **278,** for example. Jounce bumper mount **274'** can include a base wall **280'** and a side wall **282'** that extends from along the base wall to an outer peripheral edge **284'.** In some cases, jounce bumper mount **274'** can have a somewhat cup-shaped configuration that includes a cavity (not numbered) that is at least partially defined by base wall **280'** and side wall **282'** and is dimensioned to receive at least a portion of jounce bumper **272'.** Jounce bumper mount **274'** differs from jounce bumper mount **274** at least in that the inclusion and use of indexing tab **306** of jounce bumper mount **274** can be and is omitted from jounce bumper mount **274'.**

As identified in FIGS. 10 and 11, jounce bumper **272'** includes a bumper body **286'** that extends between a first or mounting surface **288'** and a second or distal surface **290** (FIG. 3) with an outer side surface **292'** extending longitudinally therebetween. In some cases, a rod passage surface **294'** can extend longitudinally through jounce bumper **272'** to at least partially define a rod passage **296** (FIG. 6) through which damper rod **222** can extend. A sensor recess **298'** can be formed into bumper body **286',** such as along mounting surface **288',** for example. Sensor recess **298'** is preferably dimensioned to permit at least a portion of sensing device **262** and sensor shield **318** to be at least partially receive within the bumper body. Jounce bumper **272'** also includes a sensing passage surface **300'** that at least partially defines a sensing passage, such has been discussed above in detail in connection with reference numbers **302, 302', 302"** and/or **302A.** It will be appreciated that sensing passage surface **300'** can at least partially form a sensing passage that includes a sensor recess portion (e.g., sensor recess **298'**) and an elongated passage portion (e.g., sensing passage **302**). In any case, in a preferred arrangement, the sensing passage is disposed in communication with sensing device **262** such that the sensing device can be exposed to properties and/or characteristics being sensed and/or such that signals or waves broadcast or otherwise transmitted from and/or received by the sensing device can be communicated through the sensing passage toward or from a distal feature or component (e.g., outer surface **270** of wall portion **250**) that would otherwise be obscured by the jounce bumper.

It will be appreciated that sensor shield **318** can be of any suitable size, shape, configuration and/or construction. Additionally, it will be appreciated that the sensor shield can be supported on or along jounce bumper mount **274'** or another suitable component, in any suitable manner. For example, in the arrangement shown in FIGS. 10 and 11, sensor shield **318** is secured along base wall **280'** of jounce bumper mount **274'**, such as by way of a flowed-material joint **320**, for example. Sensor shield **318** can be formed from a shield wall (not numbered) that can include a base wall portion **322** and a side wall portion **324** that extends from along the base wall portion to a distal edge **326.** In some cases, side wall portion **324** can at least partially form an outer surface portion **328** and an inner surface portion **330** such that sensor shield **318** can have a somewhat cup-shaped configuration that includes a cavity **332** that is at least partially defined by base wall portion **324** and side wall portion **326** and is dimensioned to receive at least a portion of sensing device **262.** In some cases, side wall portion **324** can be approximately annular and extend endlessly about the base wall portion. In other cases, a plurality of side wall portions can be included, such as may extend between edges **334**, for example.

Similar to the manner discussed above, sensor recess **298'** can be at least partially formed by opposing side surface portions **308'** and **310'** with a side surface portion **312'** extending therebetween. It will be appreciated that side surface portions **308'** and **310'** are spaced apart from one another such that sensor recess **298'** has a cross-sectional dimension, such as is represented in FIG. 5 by reference dimension **CD1** in connection with sensor recess **298.** Outer surface portion **328** of sensor shield **318** can at least partially define a cross-sectional dimension of the sensor shield, similar to the manner represented in FIG. 5 by reference dimension **CD2** in connection with sensing device **262.** In a preferred arrangement, cross-sectional dimension **CD2** of sensor shield **318** is less than cross-sectional dimension **CD1** of sensor recess **298'** such that a space or gap **316'** is formed between outer surface portion **328** and at least one of side surface portions **308'** and **310'.** In a preferred arrangement, gap **316'** is dimensioned such that rotation of jounce bumper **272'** about longitudinal axis **AX** is limited by outer surface portion **328** contacting one of side surface portions **308'** and/or **310.** In this manner the combination of sensor shield **318** and jounce bumper **272'** can be self-indexing in a manner suitable for maintaining sensing device **262** in communication with the associated sensing passage (e.g., one of sensing passages **302**, **302'**, **302"** and/or **302A**)**.**

Though shown and described herein in use in connection with a gas spring and damper assembly, it will be recognized and understood that a jounce bumper in accordance with the subject matter of the present disclosure can be used in connection with gas spring devices of other types, kind and/or constructions. As non-limiting examples, a jounce bumper in accordance with the subject matter of the present disclosure could be used on or in connection with gas spring assemblies, such as a rolling lobe-type constructions and/or convoluted bellow-type constructions.

As used herein with reference to certain features, elements, components and/or structures, numerical ordinals (e.g., first, second, third, fourth, etc.) may be used to denote different singles of a plurality or otherwise identify certain features, elements, components and/or structures, and do not imply any order or sequence unless specifically defined by the claim language. Additionally, the terms "transverse," and the like, are to be broadly interpreted. As such, the terms "transverse," and the like, can include a wide range of relative angular orientations that include, but are not limited to, an approximately perpendicular angular orientation. Also, the terms "circumferential," "circumferentially," and the like, are to be broadly interpreted and can include, but are not limited to circular shapes and/or configurations. In this regard, the terms "circumferential," "circumferentially," and the like, can be synonymous with terms such as "peripheral," "peripherally," and the like.

Furthermore, the phrase "flowed-material joint" and the like, if used herein, are to be interpreted to include any joint or connection in which a liquid or otherwise flowable material (e.g., a melted metal or combination of melted metals) is deposited or otherwise presented between adjacent component parts and operative to form a fixed and substantially fluid-tight connection therebetween. Examples of processes that can be used to form such a flowed-material joint include, without limitation, welding processes, brazing processes and soldering processes. In such cases, one or more metal materials and/or alloys can be used to form such a flowed-material joint, in addition to any material from the component parts themselves. Another example of a process that can be used to form a flowed-material joint includes applying, depositing or otherwise presenting an adhesive between adjacent component parts that is operative to form a fixed and substantially fluid-tight connection therebetween. In such case, it will be appreciated that any suitable adhesive material or combination of materials can be used, such as one-part and/or two-part epoxies, for example.

Further still, the term "gas" is used herein to broadly refer to any gaseous or vaporous fluid. Most commonly, air is used as the working medium of gas spring devices, such as those described herein, as well as suspension systems and other components thereof. However, it will be understood that any suitable gaseous fluid could alternately be used.

## Claims

1. An assembly (102; 200, 204) comprising:
a spring element (238) having a longitudinal axis and extending longitudinally between opposing first and second ends;
a first end member (234) disposed in operative engagement with said spring element (238) along said first end;
a second end member (236) disposed in operative engagement with said spring element (238) along said second end;
a sensing device (262) including an outer surface with a cross-sectional dimension and being secured in a predetermined position along one of said first and second end members (234, 236), said sensing device (262) operative to transmit at least one of sound, pressure, light and electromagnetic waves toward a distal surface and receive said at least one of said sound, pressure, light and electromagnetic waves reflected off of said distal surface to at least partially sense at least one of acceleration, pressure, temperature and height conditions of said assembly (102; 200, 204) ; and
a jounce bumper (272') supported along said one of said first and second end members (234, 236) in spaced relation to said distal surface and at least partially covering said sensing device (262), said jounce bumper (272') including a bumper body (286; 286'; 286") including a mounting end (288), a distal end, (290) and an outer surface (292) extending peripherally about said bumper body (286; 286'; 286") between said mounting and distal ends (288, 290), and said bumper body (286; 286'; 286") including a sensing passage surface (300; 300'; 300"; 300A) that at least partially defines a sensing passage (302; 302'; 302"; 302A) extending through said bumper body (286; 286'; 286") between said mounting and distal ends (288, 290) such that said sensing device (262) transmits said at least one of said sound, pressure, light and electromagnetic waves and receives said reflection of said at least one of said sound, pressure, light and electromagnetic waves through said sensing passage (302; 302'; 302"; 302A), at least a portion of said sensing passage (302; 302'; 302"; 302A) having a cross-sectional dimension greater than said cross-sectional dimension of said sensing device (262) such that said sensing device (262) is at least partially disposed within said sensing passage (302; 302'; 302"; 302A) and such that said outer surface (314) of said sensing device (262) abuttingly engages said sensing passage surface (300; 300'; 300", 300A) thereby indexing and retaining said jounce bumper (272') in a substantially-fixed rotational position about said longitudinal axis relative to said sensing device (262).

2. An assembly (102; 200, 204) according to claim 1 further comprising a damper (106; 202) including a damper housing (206) and a damper rod (222), said damper rod (222) operatively connected along one of said first and second end members (234, 236), and said damper housing (206) operatively connected along the other of said first and second end members (234, 236).

3. An assembly (102; 200, 204) according to claim 2, wherein said bumper body (286; 286'; 286") includes an inner surface (294; 294'; 294") that at least partially defines a rod passage (296; 296'; 296") extending through said bumper body (286; 286'; 286") in approximate alignment with said longitudinal axis and dimensioned to receive said damper rod (222).

4. An assembly (102; 200, 204) according to any one of claims 1-3, wherein said spring element includes a flexible wall (238) extending peripherally about said longitudinal axis and at least partially defining a spring chamber (240), said first end member (234) is secured across said first end of said flexible wall (238) such that a substantially fluid-tight seal is formed therebetween, and said second end member (236) is secured across said second end of said flexible wall (238) such that a substantially fluid-tight seal is formed therebetween.

5. An assembly (102; 200, 204) according to claim 4, wherein one of said first and second end members (234, 236) includes an outside surface (244), and said flexible wall (238) at least partially defines a rolling lobe (242) displaceable along said outside surface.

6. An assembly (102; 200, 204) according to any one of claims 1-5, wherein said sensing passage (302; 302'; 302"; 302A) includes a sensing device recess portion (298; 298') extending into said bumper body (286; 286'; 286") from along said first end that is dimensioned to receive at least a portion of said sensing device (262) and an elongated passage portion through which said sensing device (262) transmits said at least one of said sound, pressure, light and electromagnetic waves and receives said reflection of said at least one of said sound, pressure, light and electromagnetic waves.

7. A gas spring assembly (204) comprising:
a first end member (234) including a first end member wall;
a second end member (236) spaced from said first end member (234) such that a longitudinal axis is formed therebetween;
a flexible spring member (238) extending peripherally about said longitudinal axis and lengthwise between first and second end with said first end operatively connected to said first end member (234) in a substantially fluid-tight manner and said second end operatively connected to said second end member (236) in a substantially fluid tight manner such that a spring chamber (240) is at least partially defined by said flexible spring member (238) between said first and second end members (234, 236);
a sensor shield (318) secured on said first end member (234) and including a sensor shield wall that includes a side wall portion (324) extending toward said second end member (236) to a distal edge (326), said side wall portion (324) having an outer surface (328) that at least partially defines a cross-sectional dimension of said sensor shield (318) and an inner surface (330) that at least partially defines a shield recess (332);
a sensing device (262) including an outer surface (314) and operative to transmit at least one of sound, pressure, light and electromagnetic waves toward a distal surface and receive said at least one of said sound, pressure, light and electromagnetic waves reflected off of said distal surface to at least partially sense at least one of acceleration, pressure, temperature and height conditions of said gas spring assembly (204), said sensing device (262) disposed within said shield recess of said sensor shield (318) such that at least a portion of said outer surface (314) of said sensing device (262) is disposed in inwardly spaced relation to inner surface (330) of said side wall portion (324) of said sensor shield wall; and
a jounce bumper (272') supported along said first end member (234) in spaced relation to said second end member (236) and said distal surface, said jounce bumper (272') at least partially covering said sensing device (262) along said first end member (234), said jounce bumper (272') having a longitudinal axis and including:
a mounting end (288) disposed toward said first end member (234);
a distal end (290) spaced apart from said first end member (234) and said second end member (236);
an outer surface (292; 292'; 292") extending peripherally about said jounce bumper (272') between said mounting and distal ends (288, 290); and
a sensing passage surface (300; 300'; 300"; 300A) that at least partially defines a sensing passage (302; 302'; 302"; 302A) extending through said bumper body (286; 286'; 286") between said mounting and distal ends (288, 290), at least a portion of said sensing passage (302; 302'; 302"; 302A) having a cross-sectional dimension greater than said cross-sectional dimension of said sensor shield (318) such that said sensor shield (318) and said sensing device (262) are at least partially disposed within said sensing passage (302; 302'; 302"; 302A) and said outer surface (328) of said sensor shield (318) abuttingly engages said sensing passage surface (300; 300'; 300": 300A) thereby indexing and retaining said jounce bumper (272') in a substantially-fixed rotational position about said longitudinal axis relative to said sensing device (262).

8. A gas spring assembly (204) according to claim 7, wherein said jounce bumper (272') includes a bumper body (286; 286'; 286") that is at least partially formed from an elastomeric material that substantially inhibits at least one of transmission and reception of said at least one of said sound, pressure, light and electromagnetic waves therethrough.

9. A gas spring assembly (204) according to claim 7 or claim 8, wherein said sensing passage surface (300; 300'; 300"; 300A) has one of an approximately cylindrical shape and an approximately frustoconical shape.

10. A gas spring assembly (204) according to any one of claims 7-9, wherein said sensing passage (302; 302'; 302"; 302A) includes a sensing device recess portion (298; 298') extending into said bumper body (286; 286'; 286") from along said first end that is dimensioned to receive at least a portion of said sensing device (262) and an elongated passage portion through which said sensing device (262) transmits said at least one of said sound, pressure, light and electromagnetic waves and receives said reflection of said at least one of said sound, pressure, light and electromagnetic waves.

11. A gas spring assembly (204) according to any one of claims 7-10, wherein said sensing passage (302; 302'; 302"; 302A) extends along said outer surface (292") of said jounce bumper (132, 134; 272; 272') and at least partially forms an elongated groove along said outer surface (292").

12. A gas spring and gas damper assembly (102; 200) comprising:
a gas spring assembly (204) according to any one of claims 7-11; and
a damper (106; 202) operatively associated with said gas spring assembly (204), said damper (106; 202) including:
a damper rod assembly (208) including a damper rod (222) and a damper piston (224), said damper rod (222) extending lengthwise between a first end operatively connected to said first end member (234) and a second end along which said damper piston (224) is disposed; and,
a damper housing (206) including a housing wall (214) that at least partially defines a damping chamber (216) dimensioned to receive said damper piston (224) and at least a portion of said damper rod (222), said damper housing (206) operatively connected to said second end member (236); said jounce bumper (272') including an inner surface that at least partially defines a rod passage (296; 296'; 296") extending therethrough in approximate alignment with said longitudinal axis and dimensioned to receive said damper rod (222).

13. A gas spring and damper assembly (102; 200) according to claim 12, wherein said sensing passage (302') extends along said inner surface (294') of said jounce bumper (272') and at least partially forms an elongated groove along said rod passage (296').

14. A method of assembling a gas spring assembly (204), said method comprising:
providing a first end member (234) including a first end member wall;
providing a second end member (236) that is spaced from said first end member (234) such that a longitudinal axis is formed therebetween;
positioning a flexible spring member (238) peripherally about said longitudinal axis that extends lengthwise between first and second ends;
securing said first end to said first end member (234) such that a substantially fluid-tight connection is formed therebetween, and securing said second end to said second end member (236) such that a substantially fluid-tight connection is formed therebetween with a spring chamber (240) at least partially defined by said flexible spring member (238) between said first and second end members (234, 236);
providing a sensing device (262) that includes an outer surface (314), said sensing device (262) being operative to transmit at least one of sound, pressure, light and electromagnetic waves toward an associated distal surface and receive said at least one of said sound, pressure, light and electromagnetic waves reflected off of the associated distal surface to at least partially sense at least one of acceleration, pressure, temperature and height conditions of said gas spring assembly (204);
securing said sensing device (262) along said first end member (234);
providing a jounce bumper (272') having a longitudinal axis and including:
a mounting end (288) disposed toward said first end member (234);
a distal end (290) spaced apart from said first end member (234) and said second end member (236);
an outer surface (292; 292'; 292") extending peripherally about said jounce bumper (272') between said mounting and distal ends (288, 290); and
a sensing passage surface (300; 300'; 300"; 300A) that at least partially defines a sensing passage (302; 302'; 302"; 302A) extending through a bumper body (286; 286'; 286") of said jounce bumper (272') between said mounting and distal ends (288, 290), at least a portion of said sensing passage (302; 302'; 302"; 302A) having either a cross-sectional dimension greater than a cross-sectional dimension of said sensing device (262) such that said sensing device (262) is at least partially disposed within said sensing passage (302; 302'; 302"; 302A) and an outer surface (314) of said sensing device (262) abuttingly engages said sensing passage surface (300; 300'; 300"; 300A) of said jounce bumper (272') or a cross-sectional dimension greater than a cross-sectional dimension of a sensor shield (318) such that the sensor shield is at least partially disposed within said sensing passage and an outer surface of said sensor shield abuttingly engages said sensing passage surface of said jounce bumper, thereby indexing and retaining said jounce bumper (272') in a substantially-fixed rotational position about said longitudinal axis; and
supporting said jounce bumper (272') along said first end member (234) in spaced relation to said second end member (236) and the associated distal surface and such that said jounce bumper (272') at least partially covers said sensing device (262) along said first end member (234).

15. A method according to claim 14 further comprising:
providing said sensor shield (318) including a sensor shield wall with a side wall portion (324) having said outer surface (328) that at least partially defines said cross-sectional dimension of said sensor shield (318) and an inner surface (330) that at least partially defines a shield recess (332);
securing said sensor shield (318) on said first end member (234); and
positioning said sensing device (262) within said shield recess (332) of said sensor shield (318) such that at least a portion of said outer surface (314) of said sensing device (262) is disposed in inwardly spaced relation to inner surface (330) of said side wall portion (324) of said sensor shield wall.

## Patentansprüche

1. Anordnung (102; 200, 204), umfassend:
ein Federelement (238), das eine Längsachse aufweist und sich in Längsrichtung zwischen einem gegenüberliegenden ersten und zweiten Ende erstreckt;
ein erstes Endelement (234), das in Wirkverbindung mit dem Federelement (238) entlang des ersten Endes angeordnet ist;
ein zweites Endelement (236), das in Wirkverbindung mit dem Federelement (238) entlang des zweiten Endes angeordnet ist;
eine Sensorvorrichtung (262), die eine Außenfläche mit einer Querschnittsabmessung einschließt und in einer vorgegebenen Position entlang eines von dem ersten und zweiten Endelement (234, 236) befestigt ist, wobei die Sensorvorrichtung (262) wirksam ist, um mindestens eines von Schall-, Druck-, Licht- und elektromagnetischen Wellen auf eine distale Oberfläche zu übertragen und das mindestens eine von Schall-, Druck-, Licht- und elektromagnetischen Wellen zu empfangen, die von der distalen Oberfläche reflektiert werden, um mindestens eines von Beschleunigungs-, Druck-, Temperatur- und Höhenbedingungen der Anordnung (102; 200, 204) mindestens teilweise zu erfassen; und
einen Anschlagdämpfer (272'), der entlang des einen von dem ersten und zweiten Endelement (234, 236) in beabstandeter Beziehung zu der distalen Oberfläche aufgenommen wird und die Sensorvorrichtung (262) mindestens teilweise abdeckt, wobei der Anschlagdämpfer (272') einen Stoßfängerkörper (286; 286'; 286") einschließt, der ein Montageende (288), ein distales Ende (290) und eine Außenfläche (292), die sich umlaufend um den Stoßfängerkörper (286; 286'; 286") erstreckt, zwischen dem Montage- und dem distalen Ende (288, 290) einschließt, und wobei der Stoßfängerkörper (286; 286'; 286") eine Sensorkanalfläche (300; 300'; 300"; 300A) einschließt, die mindestens teilweise einen Sensorkanal (302; 302'; 302"; 302A) definiert, der sich durch den Stoßfängerkörper (286; 286'; 286") zwischen dem Montage- und dem distalen Ende (288, 290) erstreckt, sodass die Sensorvorrichtung (262) das mindestens eine der Schall-, Druck-, Licht- und elektromagnetischen Wellen überträgt und die Reflexion des mindestens einen von Schall-, Druck-, Licht- und elektromagnetischen Wellen durch den Sensorkanal (302; 302'; 302"; 302A) empfängt, wobei mindestens ein Abschnitt des Sensorkanals (302; 302'; 302"; 302A) eine Querschnittsabmessung aufweist, die größer ist als die Querschnittsabmessung der Sensorvorrichtung (262), sodass die Sensorvorrichtung (262) mindestens teilweise innerhalb des Sensorkanals (302; 302'; 302"; 302A) angeordnet ist und derart, dass die Außenfläche (314) der Sensorvorrichtung (262) bündig an der Sensorkanalfläche (300; 300'; 300", 300A) anliegt, wodurch der Anschlagdämpfer (272') in einer im Wesentlichen festen Drehposition um die Längsachse relativ zu der Sensorvorrichtung (262) getaktet und gehalten wird.

2. Anordnung (102; 200, 204) nach Anspruch 1, ferner umfassend einen Dämpfer (106; 202) mit einem Dämpfergehäuse (206) und einer Dämpferstange (222), wobei die Dämpferstange (222) entlang eines vom ersten und zweiten Endelement (234, 236) funktional verbunden ist und das Dämpfergehäuse (206) entlang des anderen vom ersten und zweiten Endelement (234, 236) funktional verbunden ist.

3. Anordnung (102; 200, 204) nach Anspruch 2, wobei der Stoßfängerkörper (286; 286'; 286") eine Innenfläche (294; 294'; 294") einschließt, die mindestens teilweise einen Stangenkanal (296; 296'; 296") definiert, der sich durch den Stoßfängerkörper (286; 286'; 286") in annähernder Ausrichtung mit der Längsachse erstreckt und zur Aufnahme der Dämpferstange (222) bemessen ist.

4. Anordnung (102; 200, 204) nach einem der Ansprüche 1 bis 3, wobei das Federelement eine flexible Wand (238) einschließt, die sich umlaufend um die Längsachse erstreckt und mindestens teilweise eine Federkammer (240) definiert, wobei das erste Endelement (234) gegenüber dem ersten Ende der flexiblen Wand (238) so befestigt ist, dass dazwischen eine im Wesentlichen fluiddichte Abdichtung ausgebildet ist, und das zweite Endelement (236) gegenüber dem zweiten Ende der flexiblen Wand (238) so befestigt ist, dass dazwischen eine im Wesentlichen fluiddichte Abdichtung ausgebildet ist.

5. Anordnung (102; 200, 204) nach Anspruch 4, wobei eines vom ersten und zweiten Endelement (234, 236) eine Außenfläche (244) aufweist und die flexible Wand (238) mindestens teilweise einen Rollbalg (242) definiert, der entlang der Außenfläche verschiebbar ist.

6. Anordnung (102; 200, 204) nach einem der Ansprüche 1 bis 5, wobei der Sensorkanal (302; 302'; 302"; 302A) einen Sensorvorrichtungs-Ausnehmungsabschnitt (298; 298') einschließt, der sich in den Stoßfängerkörper (286; 286'; 286") entlang des ersten Endes erstreckt, das so bemessen ist, dass es mindestens einen Abschnitt der Sensorvorrichtung (262) und einen länglichen Kanalabschnitt aufnimmt, durch den die Sensorvorrichtung (262) das mindestens eine von Schall-, Druck-, Licht- und elektromagnetischen Wellen überträgt und die Reflexion das mindestens eine von Schall-, Druck-, Licht- und elektromagnetischen Wellen empfängt.

7. Gasfederanordnung (204), umfassend:
ein erstes Endelement (234), das eine erste Endelementwand einschließt;
ein zweites Endelement (236), das von dem ersten Endelement (234) beabstandet ist, sodass eine Längsachse dazwischen ausgebildet wird;
ein flexibles Federelement (238), das sich umlaufend um die Längsachse und in Längsrichtung zwischen dem ersten und zweiten Ende erstreckt, wobei das erste Ende mit dem ersten Endelement (234) wirkend und im Wesentlichen fluiddicht verbunden ist und das zweite Ende mit dem zweiten Endelement (236) wirkend und im Wesentlichen fluiddicht verbunden ist, sodass eine Federkammer (240) mindestens teilweise durch das flexible Federelement (238) zwischen dem ersten und zweiten Endelement (234, 236) definiert ist;
eine Sensorabschirmung (318), die an dem ersten Endelement (234) befestigt ist und eine Sensorabschirmungswand einschließt, die einen Seitenwandabschnitt (324) einschließt, der sich in Richtung des zweiten Endelements (236) zu einer distalen Kante (326) erstreckt, wobei der Seitenwandabschnitt (324) eine Außenfläche (328) aufweist, die mindestens teilweise eine Querschnittsabmessung der Sensorabschirmung (318) definiert, und eine Innenfläche (330), die mindestens teilweise eine Abschirmungsausnehmung (332) definiert;
eine Sensorvorrichtung (262), die eine Außenfläche (314) einschließt und wirksam ist, um mindestens eines von Schall-, Druck-, Licht- und elektromagnetischen Wellen in Richtung einer distalen Fläche zu übertragen und mindestens eines der von der distalen Fläche reflektierten Schall-, Druck-, Licht- und elektromagnetischen Wellen zu empfangen, um mindestens eines von Beschleunigungs-, Druck-, Temperatur- und Höhenbedingungen der Gasfederanordnung (204) mindestens teilweise zu erfassen, wobei die Sensorvorrichtung (262) innerhalb der Abschirmungsausnehmung der Sensorabschirmung (318) so angeordnet ist, dass mindestens ein Abschnitt der Außenfläche (314) der Sensorvorrichtung (262) in nach innen beabstandeter Beziehung zur Innenfläche (330) des Seitenwandabschnitts (324) der Sensorabschirmungswand angeordnet ist; und
einen Anschlagdämpfer (272'), der entlang des ersten Endelements (234) in beabstandeter Beziehung zu dem zweiten Endelement (236) und der distalen Oberfläche aufgenommen wird, wobei der Anschlagdämpfer (272') die Sensorvorrichtung (262) entlang des ersten Endelements (234) mindestens teilweise abdeckt, wobei der Anschlagdämpfer (272') eine Längsachse aufweist und einschließt:
ein Montageende (288), das in Richtung des ersten Endelements (234) angeordnet ist;
ein distales Ende (290), das von dem ersten Endelement (234) und dem zweiten Endelement (236) beabstandet ist;
eine Außenfläche (292; 292'; 292"), die sich umlaufend um den Anschlagdämpfer (272') zwischen dem Montage- und dem distalen Ende (288, 290) erstreckt; und
eine Sensorkanalfläche (300; 300'; 300"; 300A), die mindestens teilweise einen Sensorkanal (302; 302'; 302"; 302A) definiert, der sich durch den Stoßfängerkörper (286; 286'; 286") zwischen dem Montage- und dem distalen Ende (288, 290) erstreckt, wobei mindestens ein Abschnitt des Sensorkanals (302; 302'; 302"; 302A) eine Querschnittsabmessung aufweist, die größer ist als die Querschnittsabmessung der Sensorabschirmung (318), sodass die Sensorabschirmung (318) und die Sensorvorrichtung (262) mindestens teilweise innerhalb des Sensorkanals (302; 302'; 302"; 302A) angeordnet sind und die Außenfläche (328) der Sensorabschirmung (318) bündig an der Sensorkanalfläche (300; 300'; 300": 300A) anliegt, wodurch der Anschlagdämpfer (272') in einer im Wesentlichen festen Drehposition um die Längsachse relativ zu der Sensorvorrichtung (262) getaktet und gehalten wird.

8. Gasfederanordnung (204) nach Anspruch 7, wobei der Anschlagdämpfer (272') einen Stoßfängerkörper (286; 286'; 286") einschließt, der mindestens teilweise aus einem elastomeren Material gebildet ist, das im Wesentlichen mindestens eines von Übertragung und Empfang von mindestens einem von Schall-, Druck-, Licht- und elektromagnetischen Wellen durch ihn hindurch verhindert.

9. Gasfederanordnung (204) nach Anspruch 7 oder Anspruch 8, wobei die Sensorkanalfläche (300; 300'; 300"; 300A) eines von einer annähernd zylindrischen Form und einer annähernd kegelstumpfförmigen Form aufweist.

10. Gasfederanordnung (204) nach einem der Ansprüche 7 bis 9, wobei der Sensorkanal (302; 302'; 302"; 302A) einen Sensorvorrichtungs-Ausnehmungsabschnitt (298; 298') einschließt, der sich in den Stoßfängerkörper (286; 286'; 286") entlang des ersten Endes erstreckt, das so bemessen ist, dass es mindestens einen Abschnitt der Sensorvorrichtung (262) und einen länglichen Kanalabschnitt aufnimmt, durch den die Sensorvorrichtung (262) das mindestens eine von Schall-, Druck-, Licht- und elektromagnetischen Wellen überträgt und die Reflexion das mindestens eine von Schall-, Druck-, Licht- und elektromagnetischen Wellen empfängt.

11. Gasfederanordnung (204) nach einem der Ansprüche 7 bis 10, wobei der Sensorkanal (302; 302'; 302"; 302A) sich entlang der Außenfläche (292") des Anschlagdämpfers (132, 134; 272; 272') erstreckt und mindestens teilweise eine längliche Nut entlang der Außenfläche (292") bildet.

12. Gasfeder- und Gasdämpferanordnung (102; 200), umfassend:
eine Gasfederanordnung (204) nach einem der Ansprüche 7 bis 11; und
einen Dämpfer (106; 202), der wirkend mit der Gasfederanordnung (204) verbunden ist, wobei der Dämpfer (106; 202) einschließt:
eine Dämpferstangenanordnung (208), die eine Dämpferstange (222) und einen Dämpferkolben (224) einschließt, wobei sich die Dämpferstange (222) in Längsrichtung zwischen einem ersten Ende, das funktional mit dem ersten Endelement (234) verbunden ist, und einem zweiten Ende, an dem entlang der Dämpferkolben (224) angeordnet ist, erstreckt; und
ein Dämpfergehäuse (206), das eine Gehäusewand (214) einschließt, die mindestens teilweise eine Dämpfungskammer (216) definiert, die so bemessen ist, dass sie den Dämpferkolben (224) und mindestens einen Abschnitt der Dämpferstange (222) aufnimmt, wobei das Dämpfergehäuse (206) wirkend mit dem zweiten Endelement (236) verbunden ist; wobei der Anschlagdämpfer (272') eine Innenfläche aufweist, die mindestens teilweise einen Stangenkanal (296; 296'; 296") definiert, der sich in annähernder Ausrichtung mit der Längsachse durch ihn hindurch erstreckt und zur Aufnahme der Dämpferstange (222) bemessen ist.

13. Gasfeder- und Dämpferanordnung (102; 200) nach Anspruch 12, wobei sich der Sensorkanal (302') entlang der Innenfläche (294') des Anschlagdämpfers (272') erstreckt und mindestens teilweise eine längliche Nut entlang des Stangenkanals (296') bildet.

14. Verfahren zum Zusammenbauen einer Gasfederanordnung (204), wobei das Verfahren umfasst:
Bereitstellen eines ersten Endelements (234), das eine erste Endelementwand einschließt;
Bereitstellen eines zweiten Endelements (236), das von dem ersten Endelement (234) beabstandet ist, sodass eine Längsachse dazwischen ausgebildet wird;
Positionieren eines flexiblen Federelements (238) umlaufend um die Längsachse, die sich in Längsrichtung zwischen dem ersten und zweiten Ende erstreckt;
Befestigen des ersten Endes an dem ersten Endelement (234), sodass dazwischen eine im Wesentlichen fluiddichte Verbindung gebildet wird, und Befestigen des zweiten Endes an dem zweiten Endelement (236), sodass dazwischen eine im Wesentlichen fluiddichte Verbindung mit einer Federkammer (240) gebildet wird, die mindestens teilweise durch das flexible Federelement (238) zwischen dem ersten und zweiten Endelement (234, 236) definiert ist;
Bereitstellen einer Sensorvorrichtung (262), die eine Außenfläche (314) einschließt, wobei die Sensorvorrichtung (262) wirksam ist, um mindestens eines von Schall-, Druck-, Licht- und elektromagnetischen Wellen in Richtung einer zugehörigen distalen Oberfläche zu übertragen und mindestens eines von Schall-, Druck-, Licht- und elektromagnetischen Wellen zu empfangen, die von der zugehörigen distalen Oberfläche reflektiert werden, um mindestens eines von Beschleunigungs-, Druck-, Temperatur- und Höhenbedingungen der Gasfederanordnung (204) mindestens teilweise zu erfassen;
Befestigen der Sensorvorrichtung (262) entlang des ersten Endelements (234);
Bereitstellen eines Anschlagdämpfers (272') mit einer Längsachse, einschließend:
ein Montageende (288), das in Richtung des ersten Endelements (234) angeordnet ist;
ein distales Ende (290), das von dem ersten Endelement (234) und dem zweiten Endelement (236) beabstandet ist;
eine Außenfläche (292; 292'; 292"), die sich umlaufend um den Anschlagdämpfer (272') zwischen dem Montage- und dem distalen Ende (288, 290) erstreckt; und
eine Sensorkanalfläche (300; 300'; 300"; 300A), die mindestens teilweise einen Sensorkanal (302; 302'; 302"; 302A) definiert, der sich durch einen Stoßfängerkörper (286; 286'; 286") des Anschlagdämpfers (272') zwischen dem Montageende und dem distalen Ende (288, 290) erstreckt, wobei mindestens ein Abschnitt des Sensorkanals (302; 302'; 302"; 302A) entweder eine Querschnittsabmessung aufweist, die größer ist als eine Querschnittsabmessung der Sensorvorrichtung (262), sodass die Sensorvorrichtung (262) mindestens teilweise innerhalb des Sensorkanals (302; 302'; 302"; 302A) angeordnet ist; und eine Außenfläche (314) der Sensorvorrichtung (262) bündig an der Sensorkanalfläche (300; 300'; 300"; 300A) des Anschlagdämpfers (272') anliegt, oder eine Querschnittsabmessung, die größer ist als eine Querschnittsabmessung einer Sensorabschirmung (318), sodass die Sensorabschirmung mindestens teilweise innerhalb des Sensorkanals angeordnet ist und eine Außenfläche der Sensorabschirmung bündig an der Sensorkanalfläche des Anschlagdämpfers anliegt, wodurch der
Anschlagdämpfer (272') in einer im Wesentlichen festen Drehposition um die Längsachse getaktet und gehalten wird; und
Aufnehmen des Anschlagdämpfers (272') entlang des ersten Endelements (234) in beabstandeter Beziehung zu dem zweiten Endelement (236) und der zugehörigen distalen Oberfläche und derart, dass der Anschlagdämpfer (272') die Sensorvorrichtung (262) entlang des ersten Endelements (234) mindestens teilweise abdeckt.

15. Verfahren nach Anspruch 14, ferner umfassend:
Bereitstellen der Sensorabschirmung (318), die eine Sensorabschirmungswand mit einem Seitenwandabschnitt (324) einschließt, die die Außenfläche (328) aufweist, die die Querschnittsabmessung der Sensorabschirmung (318) mindestens teilweise definiert, und eine Innenfläche (330), die eine Abschirmungsausnehmung (332) mindestens teilweise definiert;
Befestigen der Sensorabschirmung (318) an dem ersten Endelement (234); und
Positionieren der Sensorvorrichtung (262) innerhalb der Abschirmungsausnehmung (332) der Sensorabschirmung (318), sodass mindestens ein Abschnitt der Außenfläche (314) der Sensorvorrichtung (262) in nach innen beabstandeter Beziehung zur Innenfläche (330) des Seitenwandabschnitts (324) der Sensorabschirmungswand angeordnet ist.

## Revendications

1. Ensemble (102 ; 200, 204) comprenant :
un élément de ressort (238) ayant un axe longitudinal et s'étendant longitudinalement entre des première et deuxième extrémités opposées ;
un premier élément d'extrémité (234) disposé en mise en prise opérationnelle avec ledit élément de ressort (238) le long de ladite première extrémité ;
un deuxième élément d'extrémité (236) disposé en mise en prise opérationnelle avec ledit élément de ressort (238) le long de ladite deuxième extrémité ;
un dispositif de détection (262) incluant une surface externe avec une dimension en coupe transversale et étant fixé dans une position prédéterminée le long de l'un parmi lesdits premier et deuxième éléments d'extrémité (234, 236), ledit dispositif de détection (262) opérationnel pour transmettre au moins l'une parmi des ondes sonores, de pression, lumineuses et électromagnétiques en direction d'une surface distale et recevoir ladite au moins une parmi lesdites ondes sonores, de pression, lumineuses et électromagnétiques réfléchies par ladite surface distale pour détecter au moins partiellement au moins l'une parmi des conditions d'accélération, de pression, de température et de hauteur dudit ensemble (102 ; 200, 204) ; et
une butée anti-choc (272') supportée le long de celui précité parmi lesdits premier et deuxième éléments d'extrémité (234, 236) en relation espacée par rapport à ladite surface distale et couvrant au moins partiellement ledit dispositif de détection (262), ladite butée anti-choc (272') incluant un corps de butée (286 ; 286' ; 286") incluant une extrémité de montage (288), une extrémité distale (290) et une surface externe (292) s'étendant de façon périphérique autour dudit corps de butée (286 ; 286' ; 286") entre lesdites extrémités de montage et distale (288, 290), et ledit corps de butée (286 ; 286' ; 286") incluant une surface de passage de détection (300 ; 300' ; 300" ; 300A) qui définit au moins partiellement un passage de détection (302 ; 302' ; 302" ; 302A) s'étendant à travers ledit corps de butée (286 ; 286' ; 286") entre lesdites extrémités de montage et distale (288, 290) de telle sorte que ledit dispositif de détection (262) transmet ladite au moins une parmi lesdites ondes sonores, de pression, lumineuses et électromagnétiques et reçoit ladite réflexion de ladite au moins une parmi lesdites ondes sonores, de pression, lumineuses et électromagnétiques à travers ledit passage de détection (302 ; 302' ; 302" ; 302A), au moins une partie dudit passage de détection (302 ; 302' ; 302" ; 302A) ayant une dimension en coupe transversale supérieure à ladite dimension en coupe transversale dudit dispositif de détection (262) de telle sorte que ledit dispositif de détection (262) est au moins partiellement disposé au sein dudit passage de détection (302 ; 302' ; 302" ; 302A) et de telle sorte que ladite surface externe (314) dudit dispositif de détection (262) vient en prise en butée contre ladite surface de passage de détection (300 ; 300' ; 300", 300A) ce qui indexe et retient ladite butée anti-choc (272') dans une position de rotation essentiellement fixe autour dudit axe longitudinal par rapport audit dispositif de détection (262).

2. Ensemble (102 ; 200, 204) selon la revendication 1 comprenant en outre un amortisseur (106 ; 202) incluant un logement d'amortisseur (206) et une tige d'amortisseur (222), ladite tige d'amortisseur (222) reliée opérationnellement le long de l'un parmi lesdits premier et deuxième éléments d'extrémité (234, 236), et ledit logement d'amortisseur (206) relié opérationnellement le long de l'autre parmi lesdits premier et deuxième éléments d'extrémité (234, 236).

3. Ensemble (102 ; 200, 204) selon la revendication 2, dans lequel ledit corps de butée (286 ; 286' ; 286") inclut une surface interne (294 ; 294' ; 294") qui définit au moins partiellement un passage de tige (296 ; 296' ; 296") s'étendant à travers ledit corps de butée (286 ; 286' ; 286") en alignement approximatif avec ledit axe longitudinal et dimensionné pour recevoir ladite tige d'amortisseur (222).

4. Ensemble (102 ; 200, 204) selon l'une quelconque des revendications 1 à 3, dans lequel ledit élément de ressort inclut une paroi flexible (238) s'étendant de façon périphérique autour dudit axe longitudinal et définissant au moins partiellement une chambre de ressort (240), ledit premier élément d'extrémité (234) est fixé à travers ladite première extrémité de ladite paroi flexible (238) de telle sorte qu'un joint essentiellement étanche aux fluides est formé entre eux, et ledit deuxième élément d'extrémité (236) est fixé à travers ladite deuxième extrémité de ladite paroi flexible (238) de telle sorte qu'un joint essentiellement étanche aux fluides est formé entre eux.

5. Ensemble (102 ; 200, 204) selon la revendication 4, dans lequel l'un desdits premier et deuxième éléments d'extrémité (234, 236) inclut une surface extérieure (244), et ladite paroi flexible (238) définit au moins partiellement un soufflet tubulaire (242) déplaçable le long de ladite surface extérieure.

6. Ensemble (102 ; 200, 204) selon l'une quelconque des revendications 1 à 5, dans lequel ledit passage de détection (302 ; 302' ; 302" ; 302A) inclut une partie renfoncée de dispositif de détection (298 ; 298') s'étendant dans ledit corps de butée (286 ; 286' ; 286") depuis le long de ladite première extrémité laquelle est dimensionnée pour recevoir au moins une partie dudit dispositif de détection (262) et une partie de passage allongée à travers laquelle ledit dispositif de détection (262) transmet ladite au moins une parmi lesdites ondes sonores, de pression, lumineuses et électromagnétiques et reçoit ladite réflexion de ladite au moins une parmi lesdites ondes sonores, de pression, lumineuses et électromagnétiques.

7. Ensemble ressort à gaz (204) comprenant :
un premier élément d'extrémité (234) incluant une paroi de premier élément d'extrémité ;
un deuxième élément d'extrémité (236) espacé dudit premier élément d'extrémité (234) de telle sorte qu'un axe longitudinal est formé entre eux ;
un élément ressort flexible (238) s'étendant de façon périphérique autour dudit axe longitudinal et longitudinalement entre la première et deuxième extrémité avec ladite première extrémité reliée opérationnellement audit premier élément d'extrémité (234) d'une manière essentiellement étanche aux fluides et ladite deuxième extrémité reliée opérationnellement audit deuxième élément d'extrémité (236) d'une manière essentiellement étanche aux fluides de telle sorte qu'une chambre de ressort (240) est au moins partiellement définie par ledit élément ressort flexible (238) entre lesdits premier et deuxième éléments d'extrémité (234, 236) ;
une protection de capteur (318) fixée sur ledit premier élément d'extrémité (234) et incluant une paroi de protection de capteur qui inclut une partie de paroi latérale (324) s'étendant en direction dudit deuxième élément d'extrémité (236) vers un bord distal (326), ladite partie de paroi latérale (324) ayant une surface externe (328) qui définit au moins partiellement une dimension en coupe transversale de ladite protection de capteur (318) et une surface interne (330) qui définit au moins partiellement un renfoncement de protection (332) ;
un dispositif de détection (262) incluant une surface externe (314) et opérationnel pour transmettre au moins l'une parmi des ondes sonores, de pression, lumineuses et électromagnétiques en direction d'une surface distale et recevoir ladite au moins une parmi lesdites ondes sonores, de pression, lumineuses et électromagnétiques réfléchies par ladite surface distale pour détecter au moins partiellement au moins l'une parmi des conditions d'accélération, de pression, de température et de hauteur dudit ensemble ressort à gaz (204), ledit dispositif de détection (262) disposé au sein dudit renfoncement de protection de ladite protection de capteur (318) de telle sorte qu'au moins une partie de ladite surface externe (314) dudit dispositif de détection (262) est disposée en relation espacée vers l'intérieur par rapport à la surface interne (330) de ladite partie de paroi latérale (324) de ladite paroi de protection de capteur ; et
une butée anti-choc (272') supportée le long dudit premier élément d'extrémité (234) en relation espacée par rapport audit deuxième élément d'extrémité (236) et à ladite surface distale, ladite butée anti-choc (272') couvrant au moins partiellement ledit dispositif de détection (262) le long dudit premier élément d'extrémité (234), ladite butée anti-choc (272') ayant un axe longitudinal et incluant :
une extrémité de montage (288) disposée en direction dudit premier élément d'extrémité (234) ;
une extrémité distale (290) espacée dudit premier élément d'extrémité (234) et dudit deuxième élément d'extrémité (236) ;
une surface externe (292 ; 292' ; 292") s'étendant de façon périphérique autour de ladite butée anti-choc (272') entre lesdites extrémités de montage et distale (288, 290) ; et
une surface de passage de détection (300 ; 300' ; 300" ; 300A) qui définit au moins partiellement un passage de détection (302 ; 302' ; 302" ; 302A) s'étendant à travers ledit corps de butée (286 ; 286' ; 286") entre lesdites extrémités de montage et distale (288, 290), au moins une partie dudit passage de détection (302 ; 302' ; 302" ; 302A) ayant une dimension en coupe transversale supérieure à ladite dimension en coupe transversale de ladite protection de capteur (318) de telle sorte que ladite protection de capteur (318) et ledit dispositif de détection (262) sont au moins partiellement disposés au sein dudit passage de détection (302 ; 302' ; 302" ; 302A) et ladite surface externe (328) de ladite protection de capteur (318) vient en prise en butée contre ladite surface de passage de détection (300 ; 300' ; 300" : 300A) ce qui indexe et retient ladite butée anti-choc (272') dans une position de rotation essentiellement fixe autour dudit axe longitudinal par rapport audit dispositif de détection (262).

8. Ensemble ressort à gaz (204) selon la revendication 7, dans lequel ladite butée anti-choc (272') inclut un corps de butée (286 ; 286' ; 286") qui est au moins partiellement formé à partir d'un matériau élastomère qui inhibe essentiellement au moins l'une parmi la transmission et la réception de ladite au moins une parmi lesdites ondes sonores, de pression, lumineuses et électromagnétiques à travers celui-ci.

9. Ensemble ressort à gaz (204) selon la revendication 7 ou la revendication 8, dans lequel ladite surface de passage de détection (300 ; 300' ; 300" ; 300A) a l'une parmi une forme à peu près cylindrique et une forme à peu près tronconique.

10. Ensemble ressort à gaz (204) selon l'une quelconque des revendications 7 à 9, dans lequel ledit passage de détection (302 ; 302' ; 302" ; 302A) inclut une partie renfoncée de dispositif de détection (298 ; 298') s'étendant dans ledit corps de butée (286 ; 286' ; 286") depuis le long de ladite première extrémité laquelle est dimensionnée pour recevoir au moins une partie dudit dispositif de détection (262) et une partie de passage allongée à travers laquelle ledit dispositif de détection (262) transmet ladite au moins une parmi lesdites ondes sonores, de pression, lumineuses et électromagnétiques et reçoit ladite réflexion de ladite au moins une parmi lesdites ondes sonores, de pression, lumineuses et électromagnétiques.

11. Ensemble ressort à gaz (204) selon l'une quelconque des revendications 7 à 10, dans lequel ledit passage de détection (302 ; 302' ; 302" ; 302A) s'étend le long de ladite surface externe (292") de ladite butée anti-choc (132, 134 ; 272 ; 272') et forme au moins partiellement une rainure allongée le long de ladite surface externe (292").

12. Ensemble ressort à gaz et amortisseur à gaz (102 ; 200) comprenant :
un ensemble ressort à gaz (204) selon l'une quelconque des revendications 7 à 11 ; et
un amortisseur (106 ; 202) opérationnellement associé audit ensemble ressort à gaz (204), ledit amortisseur (106 ; 202) incluant :
un ensemble tige d'amortisseur (208) incluant une tige d'amortisseur (222) et un piston amortisseur (224), ladite tige d'amortisseur (222) s'étendant longitudinalement entre une première extrémité reliée opérationnellement audit premier élément d'extrémité (234) et une deuxième extrémité le long de laquelle ledit piston amortisseur (224) est disposé ; et,
un logement d'amortisseur (206) incluant une paroi de logement (214) qui définit au moins partiellement une chambre d'amortissement (216) dimensionnée pour recevoir ledit piston amortisseur (224) et au moins une partie de ladite tige d'amortisseur (222), ledit logement d'amortisseur (206) relié opérationnellement audit deuxième élément d'extrémité (236) ; ladite butée anti-choc (272') incluant une surface interne qui définit au moins partiellement un passage de tige (296 ; 296' ; 296") s'étendant à travers celui-ci en alignement approximatif avec ledit axe longitudinal et dimensionné pour recevoir ladite tige d'amortisseur (222).

13. Ensemble ressort et amortisseur à gaz (102 ; 200) selon la revendication 12, dans lequel ledit passage de détection (302') s'étend le long de ladite surface interne (294') de ladite butée anti-choc (272') et forme au moins partiellement une rainure allongée le long dudit passage de tige (296').

14. Procédé d'assemblage d'un ensemble ressort à gaz (204), ledit procédé comprenant :
la fourniture d'un premier élément d'extrémité (234) incluant une paroi de premier élément d'extrémité ;
la fourniture d'un deuxième élément d'extrémité (236) qui est espacé dudit premier élément d'extrémité (234) de telle sorte qu'un axe longitudinal est formé entre eux ;
le positionnement d'un élément ressort flexible (238) de façon périphérique autour dudit axe longitudinal lequel s'étend longitudinalement entre des première et deuxième extrémités ;
la fixation de ladite première extrémité audit premier élément d'extrémité (234) de telle sorte qu'une liaison essentiellement étanche aux fluides est formée entre eux, et la fixation de ladite deuxième extrémité audit deuxième élément d'extrémité (236) de telle sorte qu'une liaison essentiellement étanche aux fluides est formée entre eux avec une chambre de ressort (240) au moins partiellement définie par ledit élément ressort flexible (238) entre lesdits premier et deuxième éléments d'extrémité (234, 236) ;
la fourniture d'un dispositif de détection (262) qui inclut une surface externe (314), ledit dispositif de détection (262) étant opérationnel pour transmettre au moins l'une parmi des ondes sonores, de pression, lumineuses et électromagnétiques en direction d'une surface distale associée et recevoir ladite au moins une parmi lesdites ondes sonores, de pression, lumineuses et électromagnétiques réfléchies par la surface distale associée pour détecter au moins partiellement au moins l'une parmi des conditions d'accélération, de pression, de température et de hauteur dudit ensemble ressort à gaz (204) ;
la fixation dudit dispositif de détection (262) le long dudit premier élément d'extrémité (234) ;
la fourniture d'une butée anti-choc (272') ayant un axe longitudinal et incluant :
une extrémité de montage (288) disposée en direction dudit premier élément d'extrémité (234) ;
une extrémité distale (290) espacée dudit premier élément d'extrémité (234) et dudit deuxième élément d'extrémité (236) ;
une surface externe (292 ; 292' ; 292") s'étendant de façon périphérique autour de ladite butée anti-choc (272') entre lesdites extrémités de montage et distale (288, 290) ; et
une surface de passage de détection (300 ; 300' ; 300" ; 300A) qui définit au moins partiellement un passage de détection (302 ; 302' ; 302" ; 302A) s'étendant à travers un corps de butée (286 ; 286' ; 286") de ladite butée anti-choc (272') entre lesdites extrémités de montage et distale (288, 290), au moins une partie dudit passage de détection (302 ; 302' ; 302" ; 302A) ayant soit une dimension en coupe transversale supérieure à une dimension en coupe transversale dudit dispositif de détection (262) de telle sorte que ledit dispositif de détection (262) est au moins partiellement disposé au sein dudit passage de détection (302 ; 302' ; 302" ; 302A) et une surface externe (314) dudit dispositif de détection (262) vient en prise en butée contre ladite surface de passage de détection (300 ; 300' ; 300" ; 300A) de ladite butée anti-choc (272') soit une dimension en coupe transversale supérieure à une dimension en coupe transversale d'une protection de capteur (318) de telle sorte que la protection de capteur est au moins partiellement disposée au sein dudit passage de détection et une surface externe de ladite protection de capteur vient en prise en butée contre ladite surface de passage de détection de ladite butée anti-choc, ce qui indexe et retient ladite
butée anti-choc (272') dans une position de rotation essentiellement fixe autour dudit axe longitudinal ; et
le support de ladite butée anti-choc (272') le long dudit premier élément d'extrémité (234) en relation espacée par rapport audit deuxième élément d'extrémité (236) et à la surface distale associée et de telle sorte que ladite butée anti-choc (272') couvre au moins partiellement ledit dispositif de détection (262) le long dudit premier élément d'extrémité (234).

15. Procédé selon la revendication 14, comprenant en outre :
la fourniture de ladite protection de capteur (318) incluant une paroi de protection de capteur avec une partie de paroi latérale (324) ayant ladite surface externe (328) qui définit au moins partiellement ladite dimension en coupe transversale de ladite protection de capteur (318) et une surface interne (330) qui définit au moins partiellement un renfoncement de protection (332) ;
la fixation de ladite protection de capteur (318) sur ledit premier élément d'extrémité (234) ; et
le positionnement dudit dispositif de détection (262) au sein dudit renfoncement de protection (332) de ladite protection de capteur (318) de telle sorte qu'au moins une partie de ladite surface externe (314) dudit dispositif de détection (262) est disposée en relation espacée vers l'intérieur par rapport à la surface interne (330) de ladite partie de paroi latérale (324) de ladite paroi de protection de capteur.
